# EUROPEAN PATENT APPLICATION

(11) **EP 4 553 242 A1**
(43) Date of publication of application: **14.05.2025**
(21) Application number: 23306958.2
(22) Date of filing: 13.11.2023
(51) Int. Cl.: E03C 1/04, F16K 31/60

(54) **FAUCET WITH INTERCHANGEABLE HANDLES**

(71) Applicant: Kohler Co., Kohler, WI 53044 (US)
(72) Inventor: SOLA, Ferran Serra, 93631 La Plaine St. Denis (FR)
(74) Representative: Barker Brettell LLP

(57) **Abstract**

The present disclosure is generally directed towards a handle assembly (106) of a faucet (100). The handle assembly (106) includes a handle (108) having a hook (202) at an end of the handle (108). The hook (202) can be inserted into an opening (206) of a base (102) of the faucet (100). The handle assembly (106) includes a fastener (210) that can fix the handle (108) relative to the base (102) by the hook (202).

## Description

### BACKGROUND

The present disclosure relates generally to a faucet. More specifically, the present disclosure relates to an interchangeable handle assembly of a faucet that can be easily removed and replaced.

Faucets (e.g., various fixtures for drawing or regulating a flow of fluid) often include at least one handle that allows a user to control a flow rate of the fluid, a temperature of the fluid, or various other aspects of fluid flowing through the faucet. Conventionally, the faucet may need to be completely disassembled from a mounting structure supporting the faucet to remove the handle, or parts of the handle, for maintenance or for various other reasons. Such deconstruction of the faucet can be time consuming and may result in damage to one or more portions of the faucet.

Thus, it would be advantageous to provide a faucet having a handle assembly that addresses one or more of the aforementioned issues.

### SUMMARY

At least one aspect of the present disclosure relates to a faucet handle assembly. The handle assembly includes a handle having a hook at an end of the handle. The hook can be inserted into an opening of a base of the faucet. The handle assembly includes a fastener that can fix the handle relative to the base by the hook.

At least one aspect of the present disclosure relates to a faucet. The faucet includes a handle assembly. The handle assembly includes a handle having a hook at an end of the handle. The hook can be inserted into an opening of a base of the faucet. The handle assembly includes a fastener that can fix the handle relative to the base by the hook.

At least one aspect of the present disclosure relates to a method. The method includes providing a handle assembly including a handle having a hook at an end of the handle. The method includes inserting the hook of the handle into an opening of a base of a faucet. The method includes fixing, by a fastener, the handle relative to the base by the hook.

### BRIEF DESCRIPTION OF THE DRAWINGS

FIG. 1 is a perspective view of a faucet, according to an exemplary embodiment.
FIG. 2 is an exploded side perspective view of a handle assembly of the faucet of FIG. 1, according to an exemplary embodiment.
FIG. 3 is an exploded bottom perspective view of the handle assembly of FIG. 2, according to an exemplary embodiment.
FIG. 4 is a side view of a portion of the handle assembly of FIG. 2, according to an exemplary embodiment.
FIG. 5 shows perspective views of various handle levers of the handle assembly of FIG. 2, according to an exemplary embodiment.
FIG. 6 is an illustration of a process of using the handle assembly of FIG. 2, according to an exemplary embodiment.

### DETAILED DESCRIPTION

Generally, handles of faucets facilitate allowing a user to control a flow rate of fluid, a temperature of fluid, or various other aspects of fluid flowing through the faucet. In instances in which a handle, or a portion of a handle, needs to be removed or replaced, the removal process often requires the faucet to be deconstructed or completely disassembled from a mounting structure supporting the faucet (e.g., from a countertop or other surface). Such deconstruction of the faucet can be time consuming and may result in damage to one or more portions of the faucet. Accordingly, a handle assembly that facilitates allowing for easy removal and/or replacement of one or more portions of the handle with minimal reconstruction to the faucet may be desired.

Referring generally to the FIGURES, disclosed herein is a handle assembly for a faucet that can be installed in an environment (e.g., bathroom, shower, kitchen, etc.). The handle assembly includes at least one handle (e.g., lever arm) that a user can grasp to control various functions of the faucet. The handle assembly includes various components that facilitate fixing the handle with a base of the faucet. At least a portion of the handle assembly can be partially disassembled while at least a portion of the base of the faucet remains installed in the environment. For example, the handle lever arm of the handle assembly can be removed from the base of the faucet and replaced with a different handle lever arm while at least a portion of the faucet remains installed with the environment. Thus, the handle assembly may allow for the handle of the faucet to be accessed, replaced, or otherwise removed with minimal reconstruction to the faucet or faucet base as compared to conventional techniques.

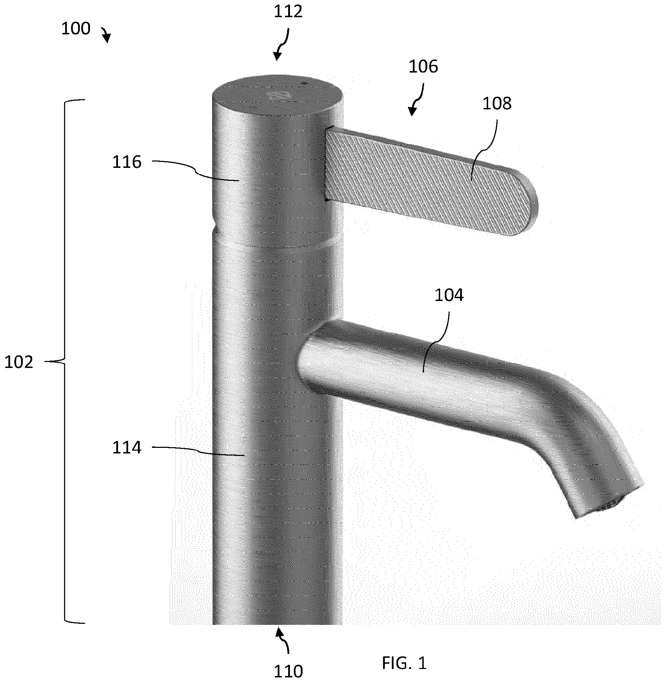

FIG. 1 depicts a perspective view of a faucet 100, according to an example embodiment. The faucet 100 can couple with an environment. For example, the faucet 100 can mount to a countertop or sink and can discharge (e.g., emit, etc.) water toward a sink, a basin, or other component for washing and the like. As shown, the faucet 100 includes a base 102 and a spout 104. The base 102 fixedly or rotatably mounts to the countertop and extends upwardly therefrom. The spout 104 couples to the base 102 extends at least partially transversely (e.g., horizontally) relative to the base 102 as shown in FIG. 1. The spout 104 can be various shapes extending in various directions relative to the base 102 (e.g., extending outward, downward, in an arc-like shape, etc.).

The faucet 100 can include a valve that controls water flow through the faucet 100. The faucet 100 can include a handle assembly 106 having a handle lever 108 (also referred to as the "handle" herein) that controls operation of the valve through movement of the handle lever 108. For example, movement of the handle lever 108 relative to at least a portion of the base 102 or the spout 104 controls operation of the valve (e.g., a flow of water, flow rate of water, temperature of water, etc.). The valve can be located within the faucet 100 (in the base 102 or in the spout 104) or outside of the faucet 100 and fluidly connected to the base 102, such as through a fluid conduit therein.

The base 102 as illustrated in FIG. 1 has a generally cylindrical shaped body extending along a longitudinal axis from a first (e.g., mounting) end 110, which is mountable to a supporting surface, to a second end 112, which is operatively coupled to the handle lever 108. The base 102 can be a variety of other shapes including, but not limited to, rectangular, triangular, etc. The base 102 can include a first base portion 114 and a second base portion 116. In some implementations, the second base portion 116 can move, rotate, or pivot relative to the first base portion 114. For example, the first base portion 114 can be fixed to the supporting surface and the second base portion 116 can be fixed to a portion of the handle assembly 106 such that movement of the handle assembly 106, or a portion thereof, causes movement (e.g., rotation, pivoting, etc.) of the second base portion 116 relative to the first base portion 114. In some implementations, the second base portion 116 can be removably coupled to the first base portion 114 such that a user can access the interior of the second base portion 116 while the first base portion 114 remains coupled with the supporting surface, as described herein.

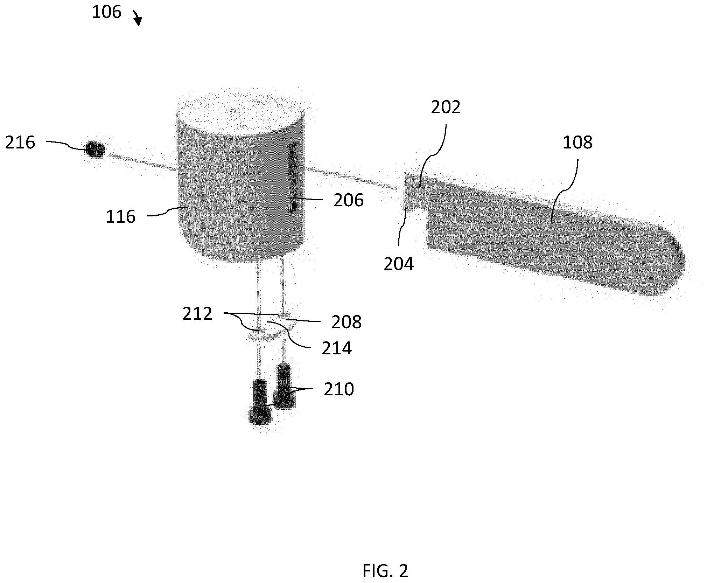

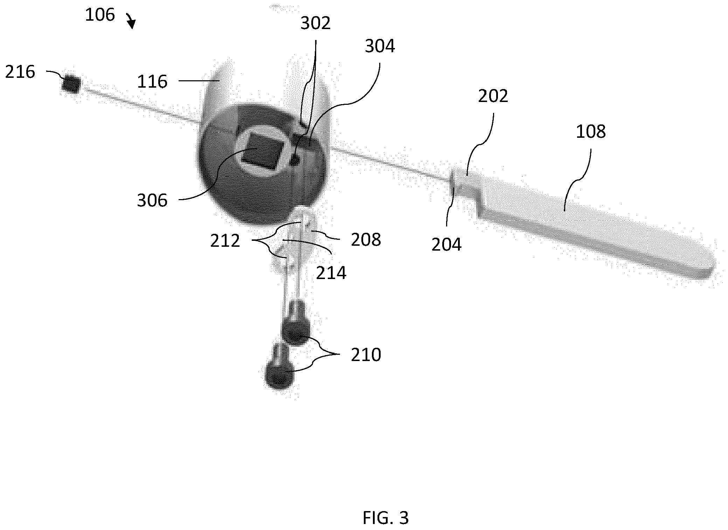

FIG. 2 depicts an exploded side perspective view of the handle assembly 106 and FIG. 3 depicts an exploded bottom perspective view of the handle assembly 106. As shown, the base 102 (e.g., the second base portion 116) of the faucet 100 includes an aperture 206 (e.g., window, opening, slot, hole, etc.) that can receive at least a portion of the handle lever 108. For example, an end of the handle lever 108 includes a coupler 202 (also referred to as "hook 202" herein). The coupler 202 can be or can include various components that facilitate coupling the handle lever 108 with the base 102 of the faucet 100. For example, the coupler 202, or hook 202, can include one or more snap fit components, friction fit components, fasters, clamps, pins (e.g., retaining pins), and/or various other components. For example, in some embodiments, the hook 202 can be defined by a cutout of material of the handle lever 108. The hook 202 can include at least one projection 204 that forms the hook 202 (e.g., such that the hook 202 is defined by an at least partially arc-like, curved, bowed, or similar shape). For example, the aperture 206 can be equal to or larger in dimension than the thickest part of the hook 202 such that the hook 202 can slide into the aperture 206 and can move in a downward direction such that a portion of the handle lever 108 is at least partially fixed in one direction relative to the second base portion 116. In other words, the projection 204 of the hook 202 can extend into and/or downward on an internal side (e.g., an at least partially hollow internal portion) of the second base portion 116 such that the hook 202 is at least partially or entirely disposed within the second base portion 116 (e.g., such that the hook 202 may not be visible from an external side of the second base portion 116, as shown in at least FIG. 1). The projection 204 can facilitate fixing the handle lever 108 relative to the second base portion 116 in a direction along a longitudinal (e.g., the longest) axis of the handle lever 108. In some embodiments, the hook 202 may or may not include the projection 204. The hook 202 may additionally or alternatively include one or more tabs, snaps, clamps, or other components that connect to the base 102 of the faucet 100. In some embodiments, the at least one dimension of the hook 202 may be greater than or equal to the width of the aperture 206 such that the handle lever 108 can couple with the base 102 through a friction fit and/or press fit.

The faucet 100 can include various features to facilitate, or further facilitate, fixing the handle lever 108 to the second base portion 116 of the faucet 100. For example, the faucet 100 can include at least one washer 208 and/or at least one fastener 210 (e.g., bolt, screw, set screw, etc.). The washer 208 can be or can include any component that can support at least one fastener 210 in fixing the handle lever 108 relative to a portion of the second base portion 116. For example, referring to FIG. 3, the second base portion 116 can include at least one hole 302 (e.g., a threaded hole) and at least one slot 304. The slot 304 can be sized and/or shaped to receive the hook 202 of the handle lever 108. The one or more holes 302 can be sized and/or shaped to threadably receive the one or more fasteners 210. The washer 208 can include at least one aperture 212 (e.g., hole, opening) sized and/or shaped to receive the one or more fasteners 210. While the fasteners 210 are depicted in one position throughout the figures, the fasteners 210 can couple with the base 102 and/or with the handle lever 108 at various other portions of the base 102 or handle lever 108. For example, the fasteners 210 can be rotated 0-180 degrees and coupled with the base 102 in various ways to fix the handle lever 108 to the base 102.

In some implementations, the washer 208 can be bowed, bent, curved, or otherwise shaped such that the washer 208 can engage (e.g., contact) at least a portion of the hook 202 and define a space 214 for the projection 204 of the hook 202 to extend into. With this configuration, the slot 304 can receive the hook 202 of the handle lever 108, at least a portion of the hook 202 can engage with and/or contact the washer 208, the projection 204 of the hook 202 can extend outward and/or downward within the space 214 defined by the washer 208, and the one or more fasteners 210 can extend through the one or more apertures 212 in the washer 208 and threadably connect with the one or more holes 302 of the second base portion 116 to rigidly connect the hook 202 to the second base portion 116.

The faucet 100 can include one or more components that facilitate coupling a valve or component of a valve (e.g., valve stem) with a portion of the base 102, such as with the second base portion 116. For example, the second base portion 116 can include at least one opening 306 that can be sized and/or shaped to receive a portion of the valve (e.g., a valve stem fixed or at least partially disposed within the first base portion 114). The faucet 100 can include at least one fastener 216 (e.g., set screw) that can extend through a portion of the second base portion 116 to fix the valve relative to the opening 306 such that at least a portion of the valve moves with the second base portion 116 (e.g., by movement of the handle assembly 106).

In some implementations, the fastener 216 can at least partially facilitate fixing the second base portion 116 relative to the first base portion 114 (e.g., by the valve being fixed with the first base portion 114). In other words, the second base portion 116 can be removed from the first base portion 114 by decoupling the fastener 216 such that a user can access the interior of the second base portion 116 while the first base portion 114 remains coupled with a supporting surface of an environment.

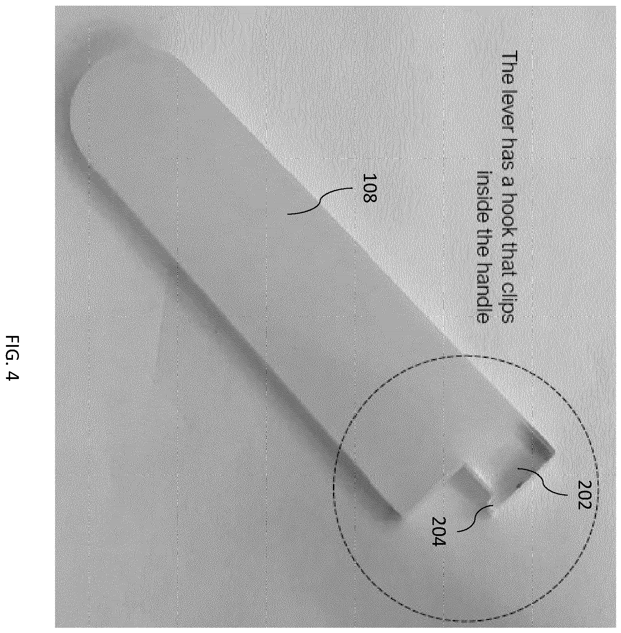

FIG. 4 depicts a detailed perspective view of a portion of the handle assembly 106 (e.g., the handle lever 108, the hook 202, and the projection 204). The handle lever 108 can be monolithically formed with the hook 202 and/or projection 204, or the handle lever 108 can be coupled with the hook 202 and/or projection 204 in various ways. For example, the handle lever 108 can be independent from and coupled to the hook 202 by welding or various other coupling processes.

The handle assembly 106 can facilitate allowing at least a portion of the handle assembly 106 to be interchangeable with a portion of the faucet 100 (e.g., with second base portion 116 of the base 102). For example, the base 102 can interchangeably couple with various different kinds of handle levers 108 having a similar hook 202 and/or projection 204 configuration. In operation, a user can remove the one or more fasteners 210 from the one or more holes 302 in the second base portion 116, remove the handle lever 108 from the second base portion 116, replace or change the handle lever 108 with a different handle lever 108 (e.g., via the hook 202 and projection 204 described herein), and fix the new handle lever 108 to the second base portion 116 by recoupling the one or more fasteners 210 to the one or more holes 302. In some implementations, a user can remove the fastener 216 from the second base portion 116 to facilitate uncoupling the second base portion 116 from the first base portion 114 to access the fastener 210 and remove the handle lever 108.

With this configuration, the handle assembly 106 advantageously allows for the handle lever 108 to be replaced, removed, or otherwise changed for various purposes (e.g., aesthetic effects, maintenance, etc.). The configuration of the handle assembly 106 (e.g., the hook 202 and the projection 204) facilitate allowing for the handle lever 108 to be easily removed and replaced with minimal reconstruction to the faucet 100. For example, in some implementations, the handle lever 108 can be removed and/or replaced while the base 102 (e.g., at least the first base portion 114) remains installed with a support surface, such as a countertop. In other words, the handle assembly 106 may include a second handle lever 108 having a second hook 202 at an end of the second handle lever 108. The second hook 202 may be similar or identical in shape to the hook 202 shown throughout the figures. The second hook 202 can be inserted into the aperture 206 of the second base portion 116 of the base 102 of the faucet 100. The one or more fasteners 210 can fix the second handle lever 108 relative to the second base portion 116 by the second hook 202 in the manner described herein. In some implementations, the second handle lever 108 may differ in shape, size, color, pattern, opacity, or various other properties from the handle lever 108.

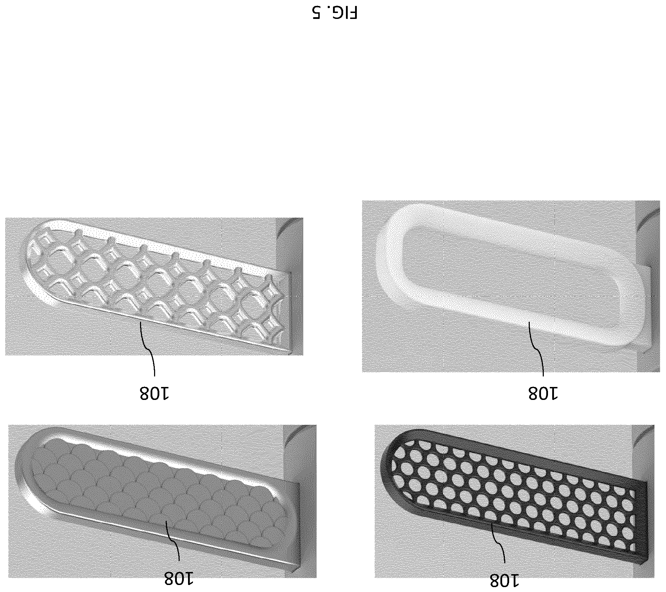

For example, the faucet 100 can couple with any sized, shaped, colored, or patterned handle lever 108 having the hook 202 and/or projection 204 configuration. In other words, one base 102 of the faucet 100 can interchangeably couple with various kinds of different handle levers 108 having a similar or identical hook 202 and projection 204 configuration. FIG. 5 depicts various examples of different sized, shaped, and/or patterned handle levers 108 that can interchangeably couple with the base 102. As depicted in FIG. 5, the handle levers 108 can include various sizes, shapes, cutouts, materials, patterns, or other features including, but not limited to, an arch like or cylindrical shape, a rectangular shape, a rounded shape, a square shape, a shape having various cutouts, fin-like features, detailed patterns, colors, ribbed edges or surfaces, opacity, etc.

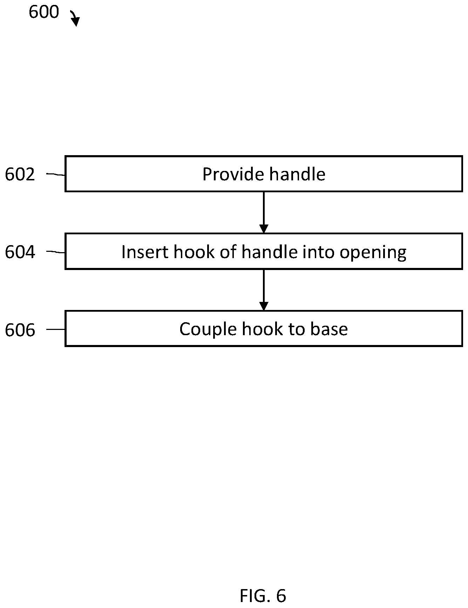

FIG. 6 depicts an example illustration of a method 600 of using the handle assembly 106. For example, the method 600 includes providing the handle assembly 106, as depicted in step 602. The handle assembly 106 includes at least one handle lever 108 that controls operation of a valve of the faucet 100 through movement of the handle lever 108. For example, movement of the handle lever 108 relative to at least a portion of the base 102 or the spout 104 controls operation of the valve (e.g., a flow of water, flow rate of water, temperature of water, etc.). An end of the handle lever 108 includes a hook 202. The hook 202 can be defined by a cutout of material of the handle lever 108. The hook 202 can include at least one projection 204 that forms the hook 202 (e.g., such that the hook 202 is defined by an at least partially arc-like, curved, bowed, non-straight, or similar shape).

The handle assembly 106 can include various amounts of handle levers 108. For example, the handle assembly 106 can include a plurality of different handle levers 108 having the hook 202 and/or projection 204. In other words, one base 102 of the faucet 100 can interchangeably couple with various kinds of different handle levers 108 having a similar or identical hook 202 and projection 204 configuration.

The plurality of different types of handle levers 108 of the handle assembly 106 can include various different sizes, shapes, cutouts, materials, patterns, or other features including, but not limited to, an arch like or cylindrical shape, a rectangular shape, a rounded shape, a square shape, a shape having various cutouts, fin-like features, detailed patterns, colors, ribbed edges or surfaces, opacity, etc.

The method includes inserting the hook 202 of the handle lever 108 into the aperture 206 of the base 102, as depicted in step 604. For example, the aperture 206 can be larger in dimension than the thickest part of the hook 202 such that the hook 202 can slide into the aperture 206 and can move in a downward direction such that a portion of the handle lever 108 is at least partially fixed in one direction relative to the second base portion 116. In other words, the projection 204 of the hook 202 can extend into and/or downward on an internal side of the second base portion such that the hook 202 is at least partially or entirely disposed within the second base portion 116 (e.g., such that the hook 202 may not be visible from an external side of the second base portion 116, as shown in at least FIG. 1). The projection 204 can facilitate fixing the handle lever 108 relative to the second base portion 116 in a direction along a longitudinal (e.g., the longest) axis of the handle lever 108.

The method 600 includes coupling or fixing the hook 202 to the base 102 of the faucet 100, as depicted in step 606. For example, the slot 304 of the second base portion 116 of the base 102 can receive the hook 202 of the handle lever 108, at least a portion of the hook 202 can engage with and/or contact the washer 208, the projection 204 of the hook can extend outward and/or downward within the space 214 defined by the washer 208, and the one or more fasteners 210 can extend through the one or more apertures 212 in the washer 208 and threadably connect with the one or more holes 302 of the second base portion 116 to rigidly connect the hook 202 to the second base portion 116.

The method 600 can include decoupling the hook 202 from the base 102, removing the hook 202 from the aperture 206, and/or replacing the handle lever 108 with a new, different handle lever 108 having a similar hook 202 and projection 204 configuration. For example, the base 102 can interchangeably couple with various different kinds of handle levers 108 having a similar hook 202 and/or projection 204 configuration. In operation, a user can remove the one or more fasteners 210 from the one or more holes 302 in the second base portion 116, remove the handle lever 108 from the second base portion 116, replace or change the handle lever 108 with a different handle lever 108 (e.g., via the hook 202 and projection 204 described herein), and fix the new handle lever 108 to the second base portion 116 by recoupling the one or more fasteners 210 to the one or more holes 302. In some implementations, a user can remove the fastener 216 from the second base portion 116 to facilitate uncoupling the second base portion 116 from the first base portion 114 to access the fastener 210 and remove the handle lever 108.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The terms "coupled," "connected," and the like, as used herein, mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

The construction and arrangement of the elements of the faucet and/or handle assembly as shown in the exemplary embodiments are illustrative only. Although only a few embodiments of the present disclosure have been described in detail, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements, the position of elements may be reversed or otherwise varied, and the nature or number of discrete elements or positions may be altered or varied.

Additionally, the word "exemplary" is used to mean serving as an example, instance, or illustration. Any embodiment or design described herein as "exemplary" is not necessarily to be construed as preferred or advantageous over other embodiments or designs (and such term is not intended to connote that such embodiments are necessarily extraordinary or superlative examples). Rather, use of the word "exemplary" is intended to present concepts in a concrete manner. Accordingly, all such modifications are intended to be included within the scope of the present disclosure. Other substitutions, modifications, changes, and omissions may be made in the design, operating conditions, and arrangement of the preferred and other exemplary embodiments without departing from the scope of the appended claims.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Other substitutions, modifications, changes and omissions may also be made in the design, operating conditions and arrangement of the various exemplary embodiments without departing from the scope of the present invention. For example, any element disclosed in one embodiment may be incorporated or utilized with any other embodiment disclosed herein. Also, for example, the order or sequence of any process or method steps may be varied or re-sequenced according to alternative embodiments. Any means-plus-function clause is intended to cover the structures described herein as performing the recited function and not only structural equivalents but also equivalent structures. Other substitutions, modifications, changes and omissions may be made in the design, operating configuration, and arrangement of the preferred and other exemplary embodiments without departing from the scope of the appended claims.

## Claims

1. A handle assembly for a faucet, comprising:
a handle comprising a hook at an end of the handle;
the hook configured to be inserted into an opening of a base of the faucet; and
a fastener configured to fix the handle relative to the base by the hook.

2. The handle assembly of claim 1, further comprising:
a second handle comprising a second hook at an end of the second handle;
the second hook configured to be inserted into the opening of the base of the faucet; and
the fastener configured to fix the second handle relative to the base by the second hook.

3. The handle assembly of claim 2, wherein:
the handle comprises a first shape; and
the second handle comprises a second shape that is different from the first shape.

4. The handle assembly of claim 1 or claim 2 or claim 3, further comprising a washer configured to receive the fastener and engage with a portion of the hook to fix the handle relative to the base.

5. The handle assembly of claim 1, or any other preceding claim, wherein:
the hook includes a curved portion defining a projection; and
the projection is configured to extend downward into a hollow portion of the base.

6. The handle assembly of claim 1, or any other preceding claim, wherein, when the hook is inserted into the opening, the hook is not visible from an external portion of the base of the faucet.

7. The handle assembly of claim 1, or any other preceding claim, further comprising:
the base of the faucet includes a first portion and a second portion that is configured to rotate relative to the first portion; and
the opening is disposed on the second portion of the base.

8. A faucet, comprising:
a handle assembly, comprising:
a handle comprising a hook at an end of the handle;
the hook configured to be inserted into an opening of a base of the faucet; and
a fastener configured to fix the handle relative to the base by the hook.

9. The faucet of claim 8, further comprising:
a second handle comprising a second hook at an end of the second handle;
the second hook configured to be inserted into the opening of the base of the faucet; and
the fastener configured to fix the second handle relative to the base by the second hook, and optionally wherein:
the handle comprises a first shape; and
the second handle comprises a second shape that is different from the first shape.

10. The faucet of claim 8 or claim 9, further comprising a washer configured to receive the fastener and engage with a portion of the hook to fix the handle relative to the base.

11. The faucet of claim 8, or claim 9 or claim 10, wherein one or both of:
a) the hook includes a curved portion defining a projection; and
the projection is configured to extend downward into a hollow portion of the base; and/or
b) when the hook is inserted into the opening, the hook is not visible from an external portion of the base of the faucet.

12. The faucet of claim 8, or any of claims 9 to 11, further comprising:
the base of the faucet includes a first portion and a second portion that is configured to rotate relative to the first portion; and
the opening is disposed on the second portion of the base.

13. A method, comprising:
providing a handle assembly comprising a handle including a hook at an end of the handle;
inserting the hook of the handle into an opening of a base of a faucet; and
fixing, by a fastener, the handle relative to the base by the hook.

14. The method of claim 13, further comprising:
a) removing the fastener to decouple the handle from the base;
inserting a second hook of a second handle into the opening of the base; and
fixing, by the fastener, the second handle relative to the base by the second hook;
wherein the handle comprises a first shape; and
wherein the second handle comprises a second shape that is different from the first shape; and/or
b) coupling a washer with the hook by the fastener to fix the handle relative to the base.

15. The method of claim 13 or claim 14, wherein any one or more of:
a) the hook includes a curved portion defining a projection; and
the projection is configured to extend downward into a hollow portion of the base;
b) when the hook is inserted into the opening, the hook is not visible from an external portion of the base of the faucet; and/or
c) the base of the faucet includes a first portion and a second portion that is configured to rotate relative to the first portion; and
the opening is disposed on the second portion of the base.
